# EUROPÄISCHE PATENTSCHRIFT

(11) **EP 3 075 223 B1**
(45) Veröffentlichungstag und Bekanntmachung des Hinweises auf die Patenterteilung: **04.12.2019**
(21) Anmeldenummer: 16152060.6
(22) Anmeldetag: 20.01.2016
(51) Int. Cl.: A01D 41/127, G05B 13/02, G05B 17/02

(54) **MÄHDRESCHER**
COMBINE HARVESTER
MOISSONNEUSE-BATTEUSE

(30) Priorität: 02.04.2015 DE 102015004343
(43) Veröffentlichungstag der Anmeldung: 05.10.2016
(73) Patentinhaber: CLAAS Selbstfahrende Erntemaschinen GmbH, 33428 Harsewinkel (DE)
(72) Erfinder: Heitmann, Christoph, 48231 Warendorf (DE); Wilken, Andreas, 49143 Bissendorf (DE); Baumgarten, Joachim, 48361 Beelen (DE); Neu, Sebastian, 49196 Bad Laer (DE); Bussmann, Christoph, 33428 Harsewinkel (DE); Vöcking, Henner, 33397 Rietberg (DE); Terörde, Stefan, 48231 Warendorf (DE); Vieregge, Christopher, 32694 Dörentrup (DE)
(74) Vertreter: CLAAS Gruppe

(56) Entgegenhaltungen:
- EP-A1- 1 543 712
- EP-A1- 1 902 609
- EP-A1- 2 728 523
- EP-A2- 2 687 924
- EP-A2- 2 837 279
- DE-A1-102009 009 767

## Beschreibung

Die Erfindung betrifft einen Mähdrescher mit den Merkmalen des Oberbegriffs von Anspruch 1.

Mähdrescher dienen der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Getreidetank zugeführt wird. Als weitere Bestandteile des Ernteguts bleiben weiter z. B. die Spreu und das Stroh übrig, welche entweder über das Feld verteilt oder - im Falle des Strohs - auf Schwad z.B. zur späteren Aufnahme durch eine Ballenpresse gelegt werden können. Hier und nachfolgend ist unter dem Begriff Erntegut der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutstrom getrennt, sodass es direkt der Reinigung zugeführt werden kann. Der übriggebliebene Erntegutstrom wird dann dem Abscheidebereich zugeführt, in welchem z.B. durch eine Schüttleranordnung das verbliebene Korn von dem Erntegutstrom getrennt und danach ebenfalls der Reinigung zugeführt wird.

Es gibt nun eine ganze Reihe von Kriterien, anhand derer die Güte des Dreschvorgangs beurteilt werden kann. Erstens sollen möglichst alle Körner aus dem Erntegutstrom entfernt und dem Korntank zugeführt werden, und zwar mit möglichst wenig gebrochenen Körnern - Bruchkörnern - und einem geringen Nichtkornanteil im Korngut. Zweitens soll ggf. auch das Stroh nicht so stark zerstört und z.B. zerschnitten werden, dass die spätere Verwertung erschwert wird. Drittens soll die für die Bearbeitung eines Feldes benötigte Zeit kurz und der dabei verbrauchte Kraftstoff möglichst gering gehalten werden. Weitere Gütekriterien sind hier denkbar. In Abhängigkeit von der Gesamtsituation, insbesondere von den jeweiligen wirtschaftlichen Rahmenbedingen, stehen unterschiedliche Gütekriterien im Vordergrund, die sich zu einer Ernteprozeßstrategie für die Durchführung des Ernteprozesses zusammensetzen.

Das Erfüllen der obigen Gütekriterien setzt voraus, dass das Dreschwerk auf bestimmte Art und Weise angesteuert wird, wobei diese Art und Weise nicht nur von den speziellen Gütekriterien, sondern auch von verschiedenen Bedingungen der Umgebung, des Mähdreschers und insbesondere des Dreschwerks selbst sowie der Beschaffenheit und Zusammensetzung des Ernteguts abhängt. Dabei bedeutet die Priorisierung des einen Gütekriteriums regelmäßig einen Nachteil für ein anderes Gütekriterium.

Aus der DE 10 2009 009 767 A1, von welcher die vorliegende Erfindung ausgeht, ist darüber hinaus ein Mähdrescher mit einem Fahrerassistenzsystem bekannt, welches Fahrerassistenzsystem verschiedene Größen (z.B. Trommeldrehzahl, Korbweite, Kornverluste) an dem Mähdrescher misst und sie daraufhin überprüft, ob sie in einen kritischen Wertebereich gelangen bzw. kritische Grenzwerte über- oder unterschreiten. Falls diese Situation eintritt, kommuniziert das Fahrerassistenzsystem interaktiv mit dem Fahrer, indem dem Fahrer Maßnahmen bei der Ansteuerung des Dreschwerks vorgeschlagen werden, die aus dem kritischen Wertebereich hinausführen sollen. Diese Vorschläge kann der Fahrer dann akzeptieren oder verwerfen, wobei in einem nächsten Schritt ggf. dem Fahrer alternative Vorschläge gemacht werden oder die vorgeschlagenen Maßnahmen von dem Fahrer durch eine Eingabe genauer spezifiziert werden können. Für die Erfassung der obigen Größen ist das Fahrerassistenzsystem mit einer Sensoranordnung ausgestattet, die verschiedene Sensoren für die Erfassung unterschiedlicher Arten von Verlusten wie Ausdruschverlusten, Abscheideverlusten, Reinigungsverlusten o. dgl. aufweist.

Eine Herausforderung für die Realisierung des Fahrerassistenzsystems besteht darin, dass unterschiedliche Mähdrescher ausstattungsbedingt unterschiedliche, meist komplexe Sensoranordnungen aufweisen können und, ggf., dass sich die jeweilige Sensoranordnung im Laufe eines Produktlebenszyklus des Mähdreschers auch erweitern oder reduzieren kann. Hinzu kommt, dass einzelne Sensoren der Sensoranordnung verschleißbedingt ausfallen können. Die erstgenannten Aspekte können die Herstellung des Mähdreschers verkomplizieren, der letztgenannte Aspekt kann den Betrieb des Mähdreschers beeinträchtigen.

Ausgehend von diesem Stand der Technik besteht die Aufgabe der Erfindung darin, den aus dem Stand der Technik bekannten Mähdrescher mit Fahrerassistenzsystem im Hinblick auf den Einsatz komplexer Sensorsysteme zu verbessern.

Das obige Problem wird bei einem Mähdrescher mit den Merkmalen des Oberbegriffs von Anspruch 1 durch die Merkmale des kennzeichnenden Teils von Anspruch 1 gelöst.

Der Erfindung liegt die Überlegung zugrunde, einer Sensoranordnung zunächst eine Sensorkonfiguration zuzuordnen, die durch die Art und den Umfang betriebsbereiter Sensoren der Sensoranordnung definiert ist, und die Ansteuerung des Dreschwerks in Abhängigkeit von der Sensorkonfiguration vorzunehmen.

In dem Speicher des Fahrerassistenzsystems ist ein funktionales Systemmodell für zumindest einen Teil des Mähdreschers hinterlegt, das zusammen mit dem Ernteprozeßzustand die Basis für die insbesondere autonome Ermittlung des mindestens einen Dreschwerksparameters bildet. Der Begriff "funktionales Systemmodell" bedeutet, dass zumindest ein Teil der funktionalen Zusammenhänge innerhalb des Mähdreschers von dem Systemmodell abgebildet werden. Beispiele hierfür werden weiter unten gegeben.

Der Ernteprozeßzustand bildet hier und vorzugsweise dadurch eine Basis für die insbesondere autonome Ermittlung des mindestens einen Dreschwerksparameters, dass das Systemmodell in noch zu erläuternder Weise auf den Ernteprozeßzustand abgeglichen wird. Unter dem Ernteprozesszustand sind hier alle Zustandsgrößen zusammengefasst, die in irgendeiner Weise mit dem Ernteprozess im Zusammenhang stehen. Dazu gehören Feldbestandsinformationen und/oder Ernteprozessparameter und/oder Dreschwerksparameter und/oder Umgebungsinformationen.

Wesentlich ist nun, dass die Recheneinheit das der Ansteuerung des Dreschwerks zugrundeliegende Systemmodell in Abhängigkeit von der im Speicher abgelegten Sensorkonfiguration definiert. Dies wiederum trägt der Überlegung Rechnung, dass in Abhängigkeit von den jeweils verfügbaren, betriebsbereiten Sensoren unterschiedliche Möglichkeiten der insbesondere autonomen Ansteuerung des Dreschwerks bestehen. Beispielsweise macht eine autonome Ansteuerung nur in Abhängigkeit von solchen Ernteprozeßparametern Sinn, die auch von der Sensoranordnung ermittelt werden können.

Bei der bevorzugten Ausgestaltung gemäß Anspruch 2 bildet das Dreschwerk zusammen mit dem Fahrerassistenzsystem einen Dreschautomaten. Dies bedeutet, dass das Fahrerassistenzsystem mit seinem Speicher zum Hinterlegen von Daten und seiner Rechenvorrichtung dazu eingerichtet ist, einzelne Maschinenparameter des Dreschwerks autonom zu ermitteln und dem Dreschwerk vorzugeben. Solche Maschinenparameter werden vorliegend als "Dreschwerksparameter" bezeichnet. Die Basis für die Ermittlung der Dreschwerksparameter bildet eine benutzerseitige Auswahl von Ernteprozeßstrategien, die in dem Speicher des Fahrerassistenzsystems abgelegt sind. Dadurch kann mit einer einmaligen Auswahl der aktiven Ernteprozeßstrategie durch den Fahrer eine Art und Weise der Ansteuerung des Dreschwerks vorgegeben werden. Für die Ermittlung der Dreschwerksparameter im engeren Sinne ist eine weitere Eingabe vom Fahrer nicht erforderlich. Der Fahrer hat aber die Möglichkeit, die gewählte Ernteprozeßstrategie auf Wunsch zu ändern, so dass daraufhin weiter eine autonome Ansteuerung stattfindet, jedoch dann ggf. mit einer anderen Priorisierung.

Zur Abbildung der funktionalen Zusammenhänge mittels des Systemmodells ist es vorzugsweise gemäß Anspruch 4 vorgesehen, dass eine Parametergruppe von Ernteprozeßparametern definiert ist, denen jeweils mindestens ein Kennlinienfeld zugeordnet ist, wobei der Ernteprozessparameter die Ausgangsgröße des jeweiligen Kennlinienfeldes ist. Mittels eines obigen Kennlinienfeldes lassen sich auch komplexe funktionale Zusammenhänge mit geringem rechnerischen Aufwand abbilden. Vorzugsweise wird die Parametergruppe von der Rechenvorrichtung in Abhängigkeit von der Sensorkonfiguration, also in Abhängigkeit von der sensorischen Erfassbarkeit verschiedener Ernteprozeßparameter, definiert.

Ein obiges Kennlinienfeld bildet hier und vorzugsweise ganz allgemein die Abhängigkeit einer Ausgangsgröße von mindestens einer Eingangsgröße, insbesondere von zwei oder mehreren Eingangsgrößen, ab.

Weiter vorzugsweise ist es gemäß Anspruch 5 vorgesehen, dass die Rechenvorrichtung mindestens eines der Kennlinienfelder im laufenden Erntebetrieb, vorzugsweise zyklisch, auf den tatsächlichen Ernteprozesszustand abgleicht, wobei die Definition des Systemmodells durch die Recheneinheit in Abhängigkeit von der im Speicher abgelegten Sensorkonfiguration neben der Definition der Kennlinienfelder auch eine Definition des Abgleichs des Systemmodells umfasst. Die Definition des Abgleichs umfasst Informationen darüber, ob das betreffende Kennlinienfeld sensorbasiert abgeglichen werden soll (Anspruch 6) oder ob das betreffende Kennlinienfeld grundsätzlich nicht abgeglichen werden soll (Anspruch 7). In beiden Fällen ist es vorzugsweise möglich, benutzerseitig einzugreifen (Anspruch 8).

Der Begriff "zyklisch" ist vorliegend stets weit zu verstehen und bedeutet hier eine fortlaufende jeweilige Aktivität mit konstanter, aber auch mit sich verändernder Zykluszeit.

Die weiter bevorzugte Ausgestaltung gemäß Anspruch 9 trägt dem Umstand Rechnung, dass sich die jeweils aktuelle Sensorkonfiguration insbesondere durch einen verschleißbedingten Ausfall eines Sensors ändern kann. Hierzu wird vorgeschlagen, dass die Rechenvorrichtung eine insbesondere zyklische Überprüfung der Sensoren vornimmt und die resultierende Sensorkonfiguration im Speicher ablegt.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine Seitenansicht eines vorschlagsgemäßen Mähdreschers,
- Fig. 2: eine schematische Darstellung eines Fahrerassistenzsystems eines vorschlagsgemäßen Mähdreschers
- Fig. 3: zwei Kennlinienfelder mit der Ausgangsgröße "Ausdruschverluste" und mit den Eingangsgrößen a) "Schichthöhe" und "Trommeldrehzahl" und b) "Schichthöhe" und "Korbweite",
- Fig. 4: zwei Kennlinienfelder mit der Ausgangsgröße "Abscheideverluste" und mit den Eingangsgrößen a) "Schichthöhe" und "Trommeldrehzahl" und b) "Schichthöhe" und "Korbweite",
- Fig. 5: zwei Kennlinienfelder mit der Ausgangsgröße "Schlupf-Dreschwerk-Antrieb" und mit den Eingangsgrößen a) "Schichthöhe" und "Trommeldrehzahl" und b) "Schichthöhe" und "Korbweite"
- Fig. 6: zwei Kennlinienfelder mit der Ausgangsgröße "Bruchkornanteile" und mit den Eingangsgrößen a) "Schichthöhe" und "Trommeldrehzahl" und b) "Schichthöhe" und "Korbweite",
- Fig. 7: zwei Kennlinienfelder mit der Ausgangsgröße "Reinigungsverluste" und mit den Eingangsgrößen a) "Schichthöhe" und "Trommeldrehzahl" und b) "Schichthöhe" und "Korbweite".

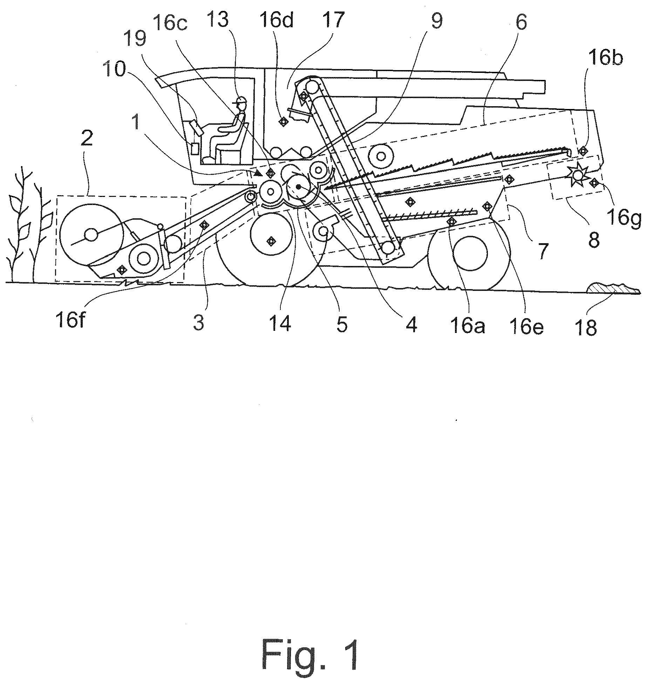

Ein vorschlagsgemäßer Mähdrescher weist ein Dreschwerk 1 zum Dreschen von aufgenommenem Erntegut zu Korngut auf. Unter dem Erntegut ist dabei das gesamte vom Feldbestand aufgenommene und dem Dreschwerk 1 zugeführte Material zu verstehen, wobei das Korngut dann die von dem Mähdrescher aus dem Erntegut zu gewinnenden Körner bezeichnet. Wie in Fig. 1 zu erkennen ist, wird ein Feldbestand durch ein Schneidwerk 2 des Mähdreschers abgemäht und das somit gewonnene Erntegut durch einen Schrägförderer 3 dem Dreschwerk 1 zugeführt.

Das Dreschwerk 1 ist mit einer Dreschtrommel 4 ausgestattet, die mit einem Dreschkorb 5 zusammenwirkt. Dem Dreschwerk 1 ist eine Abscheideanordnung 6 prozesstechnisch nachgelagert. Der dem Dreschwerk 1 zugeführte Erntegutstrom wird also im Anschluss - ohne das bereits hier gewonnene Korngut - der Abscheideanordnung 6 zugeführt.

Grundsätzlich dient das Dreschwerk 1 zum Ausreiben des überwiegenden Teils des Kornguts aus dem Stroh des Ernteguts durch den Dreschvorgang. In der Abscheideanordnung 6 wird dann das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 1 und der Abscheideanordnung 6 gewonnene Korngut wird dann einer Reinigungsanordnung 7 zugeführt. In der Reinigungsanordnung 7, welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung 9, z.B. einem Kornelevator, in einen Korntank 9a. Das ausgedroschene Stroh - also das verbliebene Erntegut in der Abscheideanordnung 6 - wird von dem Mähdrescher abgelegt, z. B. als Schwad entlang der Fahrspur.

Ein obiges Dreschwerk 1 kann durch die Vorgabe verschiedener Maschinenparameter angesteuert werden. Hierunter fallen in Abhängigkeit vom Aufbau des Dreschwerks 1 Antriebsparameter wie beispielsweise eine Trommeldrehzahl 1a oder sonstige Bewegungskennzahlen der Dreschtrommel 4 sowie eine Korbweite 1b - also der Abstand zwischen der Dreschtrommel 4 und einem Dreschkorb 5. Sofern das Dreschwerk 1 Entgrannerklappen aufweist, können auch diese im Rahmen der Ansteuerung des Dreschwerks 1 verstellt werden.

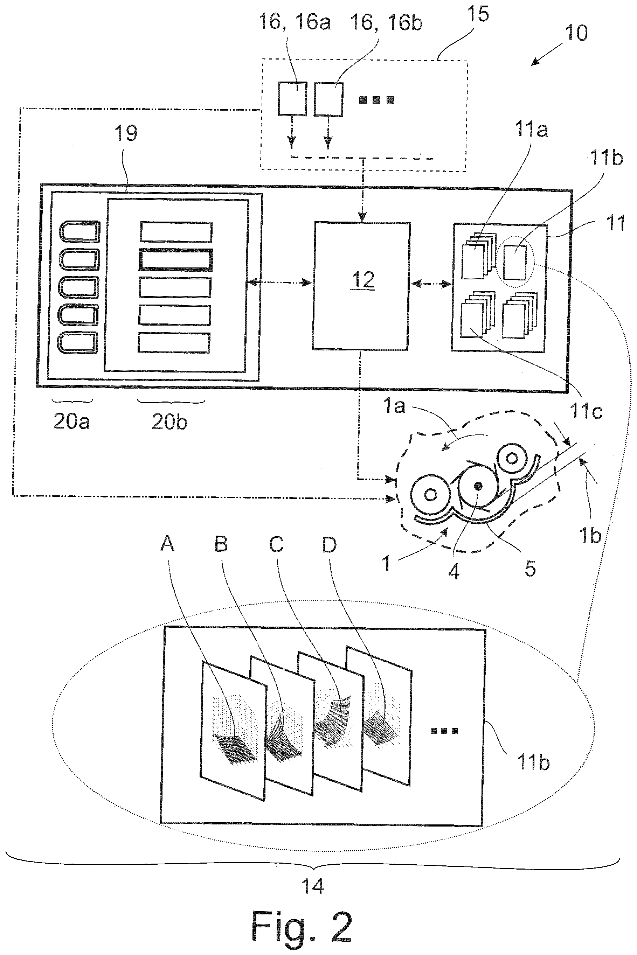

Der vorschlagsgemäße Mähdrescher weist ferner ein Fahrerassistenzsystem 10 zur Ansteuerung des Dreschwerks 1 auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem 10 dazu eingerichtet, einen Fahrer 13 des Mähdreschers bei der Bedienung des Mähdreschers zu unterstützen. Das Fahrerassistenzsystem 10 mit dem Speicher 11 und der Rechenvorrichtung 12 ist schematisch in Fig. 2 gezeigt.

Vorschlagsgemäß ist eine Sensoranordnung 15 zur Erfassung zumindest eines Teils des aktuellen Ernteprozesszustands vorgesehen, die hier mit mehreren Sensoren 16 ausgestattet ist. Beispiele für die verschiedenen Sensoren 16 werden weiter unten angesprochen.

Vorschlagsgemäß ist der Sensoranordnung 15 eine Sensorkonfiguration 11c zugeordnet, die durch die Art und den Umfang betriebsbereiter Sensoren 16 der Sensoranordnung 15 definiert und im Speicher 11 hinterlegt oder hinterlegbar ist.

In dem Speicher 11 ist ein funktionales Systemmodell 11b für zumindest einen Teil des Mähdreschers hinterlegt, wobei die Rechenvorrichtung 12 dazu eingerichtet ist, eine insbesondere autonome Ermittlung mindestens eines Dreschwerksparameters 1a, 1b basierend auf dem Systemmodell 11b und dem Ernteprozeßzustand vorzunehmen. Bei dem funktionalen Systemmodell 11b handelt es sich um ein rechnerisches Modell zur Abbildung funktionaler Zusammenhänge innerhalb des Mähdreschers. Beispiele für solche funktionalen Zusammenhänge werden weiter unten erläutert.

Vorschlagsgemäß definiert die Recheneinheit 12 das der Ansteuerung des Dreschwerks 1 zugrundeliegende Systemmodell 11b in Abhängigkeit von der im Speicher 11 abgelegten Sensorkonfiguration 11c. Dies wird weiter unten anhand von Beispielen erläutert.

Vorzugsweise bildet das Dreschwerk 1 zusammen mit dem Fahrerassistenzsystem 10 einen Dreschautomaten 14. Dies ist vorschlagsgemäß dadurch realisiert, dass im Speicher 11 eine Mehrzahl auswählbarer Ernteprozeßstrategien 11a hinterlegt sind und dass die Rechenvorrichtung 12 dazu eingerichtet ist, zur Umsetzung der ausgewählten Ernteprozeßstrategie 11a bzw. der Ernteprozeßstrategien 11a mindestens einen Maschinenparameter für das Dreschwerk 1 autonom zu ermitteln und dem Dreschwerk 1 vorzugeben. Solche Maschinenparameter für das Dreschwerk 1 werden vorliegend als "Dreschwerksparameter" bezeichnet. Auf diese Weise wird ein Dreschwerkautomat 14 bereitgestellt, welcher alle für die Arbeit des Dreschwerks 1 relevanten Größen umfassend untereinander koordiniert regelt. Es wird also insbesondere vermieden, dass von unterschiedlicher Seite konkurrierende und sich gegebenenfalls gegenseitig aushebelnde Ansteuerungen erfolgen. Vielmehr erfolgt die Ansteuerung aller relevanten Parameter "aus einer Hand". Ebenso kann der Fahrer 13 ein gewünschtes qualitatives Ergebnis vorgeben und braucht kein eigenes Expertenwissen zu den für dieses Ergebnis erforderlichen detaillierten Einzelheiten.

Es handelt sich bei der Ermittlung der Dreschwerksparameter um eine autonome Ermittlung insoweit, dass prinzipiell die Ernteprozeßstrategie 11a durch die Rechenvorrichtung 12 umgesetzt wird, ohne dass bei der Ermittlung der Dreschwerksparameter 1a, 1b im engeren Sinne ein Eingreifen des Fahrers 13 oder eine Rückfrage an den Fahrer 13 nötig ist. Ein solches Eingreifen des Fahrers 13 ist demnach weiterhin prinzipiell möglich, aber nicht erforderlich. Dabei unterscheiden sich die hinterlegten Ernteprozeßstrategien 11a in der Zielvorgabe der Einstellung oder der Optimierung von Ernteprozessparametern, wie noch erläutert wird.

Es darf darauf hingewiesen werden, dass das Fahrerassistenzsystem 10 grundsätzlich zentral ausgestaltet sein kann. Es dient insoweit der Ansteuerung nicht nur des Dreschwerks 1, sondern auch vor- und nachgelagerter Arbeitsorgane, wie des Schneidwerks 2, des Schrägförderers 3, der Abscheideanordnung 6, der Reinigungsanordnung 7 sowie der Verteilanordnung 8. Grundsätzlich ist es aber denkbar, dass das Fahrerassistenzsystem 10 dezentral strukturiert ist und aus einer Anzahl einzelner Steuersysteme zusammengesetzt ist. Dann kann es beispielsweise vorgesehen sein, dass zumindest ein Teil der Arbeitsorgane des Mähdreschers jeweils ein zugeordnetes, dezentrales Steuersystem aufweisen.

Das Systemmodell 11b wird von der Rechenvorrichtung 12 vorzugsweise im laufenden Erntebetrieb auf den aktuellen Ernteprozesszustand abgeglichen. Dies bedeutet, dass die Rechenvorrichtung 12 überprüft, ob die in dem Systemmodell 11b abgebildeten funktionalen Zusammenhänge mit dem tatsächlichen Ernteprozesszustand übereinstimmen. Sofern sich bei dieser Überprüfung Abweichungen ergeben, nimmt die Rechenvorrichtung 12 eine entsprechende Änderung des Systemmodells 11b vor. Dieser Abgleich erfolgt in besonders bevorzugter Ausgestaltung zyklisch, wobei im Hinblick auf das weite Verständnis des Begriffs "zyklisch" auf den allgemeinen Teil der Beschreibung verwiesen werden darf.

Im Sinne kurzer Reaktionszeiten des Mähdreschers auf sich verändernde Ernteprozesszustände ist es vorzugsweise vorgesehen, dass die Rechenvorrichtung 12 die Dreschwerksparameter in obigem Sinne zyklisch ermittelt. Auch in diesem Zusammenhang darf auf das weite Verständnis des Begriffs "zyklisch" verwiesen werden.

Wie weiter oben erläutert, umfasst der Begriff "Ernteprozesszustand" alle den Ernteprozess betreffenden Informationen. Dazu gehören Feldbestandsinformationen wie "Bestandsdichte", "Dreschbarkeit des Bestands" und "Bestandsfeuchte". Ferner gehören dazu der Ernteprozessparameter "Ausdruschverluste" als ein Maß für die nicht ausgedroschenen, auf dem Feld abgelegten Körner, der Ernteprozessparameter "Bruchkornanteile" als ein Maß für die gebrochenen, im Korntank abgelegten Körner, der Ernteprozeßparameter "Schichthöhe" als ein Maß für den Durchsatz, der Ernteprozeßparameter "Abscheideverluste" als Maß für die von der Abscheideanordnung 6 auf dem Feld abgelegten Körner, der Ernteprozeßparameter "Reinigungsverluste" als Maß für die von der Reinigungsanordnung 7 auf dem Feld abgelegten Körner, der Ernteprozeßparameter "Schlupf-Dreschwerk-Antrieb" als ein Maß für Dreschwerksbelastung und den Ernteprozeßparameter "Kraftstoffverbrauch" als ein Maß für den Energieverbrauch des Dreschwerksantriebs. Schließlich gehören dazu Dreschwerksparameter wie "Trommeldrehzahl" und "Korbweite" sowie Umgebungsinformationen wie "Umgebungstemperatur" und "Umgebungsfeuchte". All diese dem Ernteprozesszustand zuzurechnenden Informationen lassen sich auf unterschiedliche Art und Weise ermitteln.

Hinsichtlich des Begriffs "Schichthöhe" darf darauf hingewiesen werden, dass dieser Begriff weit auszulegen ist und sowohl die Schichthöhe des vom Dreschwerk aufgenommenen Gutstroms im engeren Sinne als auch den Durchsatz des durch das Dreschwerk 1 durchlaufenden Gutstroms umfasst. Insoweit gelten alle Ausführungen zu der Schichthöhe gleichermaßen für den Durchsatz. Insbesondere kann der Begriff "Schichthöhe" vorliegend durch den Begriff "Durchsatz" ersetzt werden.

In Abhängigkeit von der Ausstattung des Mähdreschers kann die Sensoranordnung 15 unterschiedliche Sensoren 16 aufweisen. In Abhängigkeit von der Sensorkonfiguration 11ckann bzw. können einer oder mehrere der Ernteprozeßparameter "Ausdruschverluste" durch einen Ausdruschverlustsensor 16a, "Bruchkornanteil" durch einen Bruchkornsensor 16d, "Schichthöhe" durch einen Schichthöhensensor 16f, "Abscheideverluste" durch einen Abscheideverlustsensor 16b, "Reinigungsverluste" durch einen Reinigungsverlustsensor 16e, "Schlupf-Dreschwerk-Antrieb" durch einen Schlupfsensor 16c und "Kraftstoffverbrauch" durch einen nicht dargestellten Kraftstoffverbrauchsensor ermittelt werden.

Alternativ oder zusätzlich kann die Sensoranordnung 15 - wie ebenfalls in der Fig. 1 dargestellt - einen Schwadsensor 16g zur Erfassung einer Schwadinformation aufweisen. Ein Schwadsensor 16g lässt sich bei geeigneter Auslegung zur Erfassung eines Kornanteils im Schwad 18 nutzen.

Die in Rede stehenden, vom Fahrer 13 auswählbaren Ernteprozeßstrategien 11a sind jeweils auf verschiedene Zielvorgaben gerichtet. In einer ersten Variante ist mindestens eine Ernteprozeßstrategie 11a auf die Zielvorgabe der Einstellung oder der Optimierung mindestens eines Ernteprozessparameters wie "Ausdruschverluste", "Bruchkornanteil", "Abscheideverluste", "Reinigungsverluste", "Schlupf-Dreschwerk-Antrieb", "Kraftstoffverbrauch" o. dgl. gerichtet. Die Umsetzung der Ernteprozeßstrategien 11a soll dabei jeweils durch eine entsprechende Vorgabe von Dreschwerksparametern, hier und vorzugsweise der für die Ansteuerung des Dreschwerks 1 im Vordergrund stehenden Dreschwerksparameter "Trommeldrehzahl" und "Korbweite", erfolgen.

Zur Abbildung der funktionalen Zusammenhänge ist eine Parametergruppe von Ernteprozeßparametern definiert, denen jeweils mindestens ein in dem Speicher 11 hinterlegtes, funktionale Zusammenhänge des Mähdreschers abbildendes Kennlinienfeld A-J des Systemmodells 11b zugeordnet ist, wobei der jeweilige Ernteprozeßparameter die Ausgangsgröße des zugeordneten, mindestens einen Kennlinienfelds A-J ist.

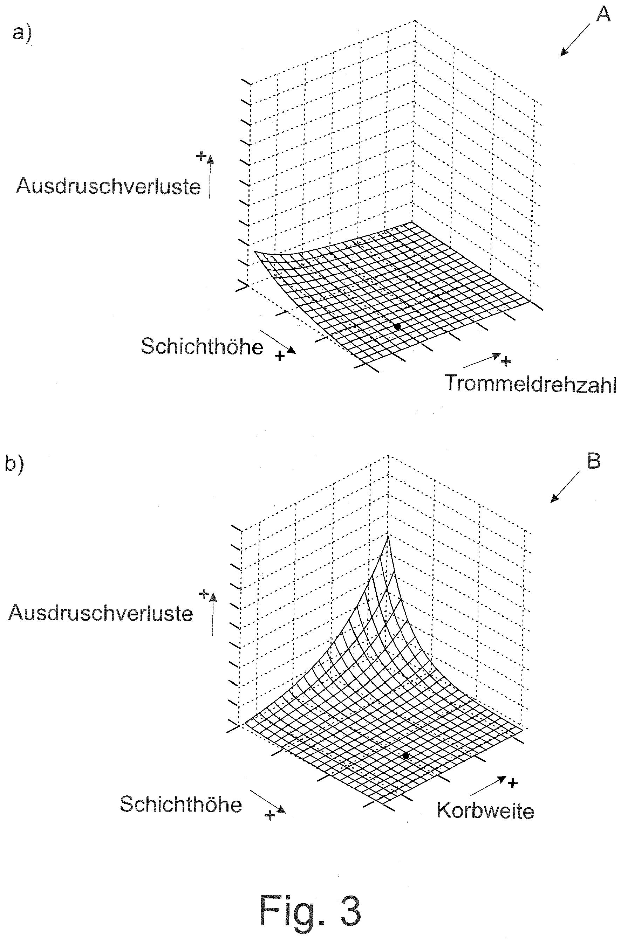

In besonders bevorzugter Ausgestaltung und in den Fig. 3 bis 7 dargestellt ist es so, dass der Ernteprozessparameter "Schichthöhe" und ein Dreschwerksparameter, vorzugsweise der Dreschwerksparameter "Trommeldrehzahl" oder der Dreschwerksparameter "Korbweite", als Eingangsgrößen für das mindestens eine Kennlinienfeld A-J definiert sind.

Zur Abbildung der funktionalen Zusammenhänge zwischen einem Ernteprozeßparameter als Ausgangsgröße und verschiedenen Eingangsgrößen sind diesem Ernteprozeßparameter ein erstes Kennlinienfeld und ein zweites Kennlinienfeld zugeordnet. Dabei bilden für das erste Kennlinienfeld A,C,E,G,I der weitere Ernteprozessparameter "Schichthöhe" und der Dreschwerksparameter "Trommeldrehzahl" die Eingangsgrößen (Abbildung a) in den Fig. 3 bis 7), während für das zweite Kennlinienfeld B,D,F,H,J der weitere Ernteprozessparameter "Schichthöhe" und der Dreschwerksparameter "Korbweite" die Eingangsgrößen bilden (Abbildung b) in den Fig. 3 bis 7).

Fig. 3a) zeigt das Kennlinienfeld A zu dem funktionalen Zusammenhang zwischen der Ausgangsgröße "Ausdruschverluste" und den Eingangsgrößen "Schichthöhe" und "Trommeldrehzahl". Hieraus ergibt sich, dass der Ausdrusch umso besser ist, je höher die den Durchsatz repräsentierende Eingangsgröße Schichthöhe und je höher die Dreschtrommeldrehzahl.

Fig. 3b) zeigt das Kennlinienfeld B zu dem funktionalen Zusammenhang zwischen der Ausgangsgröße "Ausdruschverluste" und den Eingangsgrößen "Schichthöhe" und "Korbweite". Hieraus ergibt sich, dass der Ausdrusch umso besser ist, je höher die den Durchsatz repräsentierende Schichthöhe und je niedriger die Korbweite.

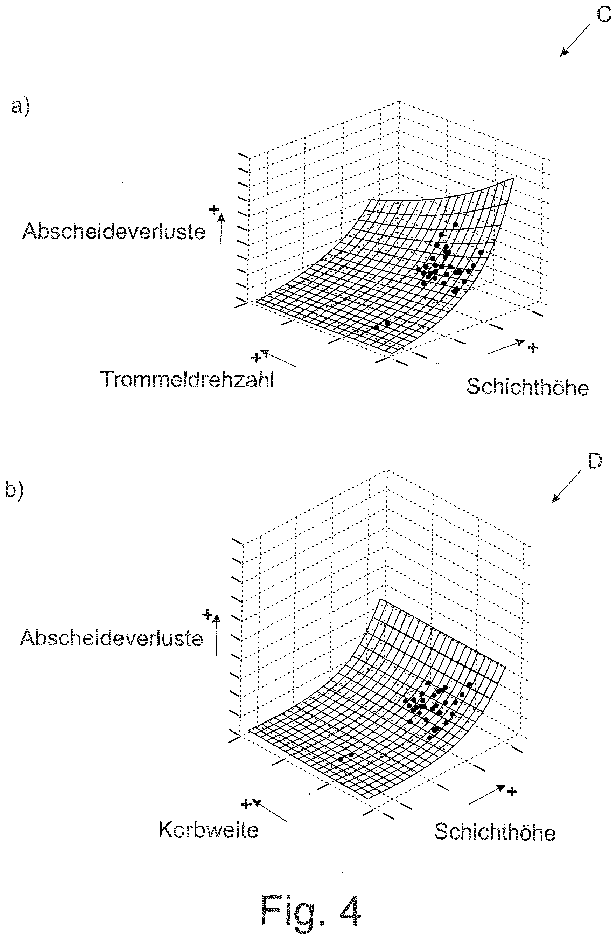

Fig. 4a) zeigt das Kennlinienfeld C zu dem funktionalen Zusammenhang zwischen der Ausgangsgröße "Abscheideverluste" und den Eingangsgrößen "Schichthöhe" und "Trommeldrehzahl". Hieraus ergibt sich, dass mit ansteigender Schichthöhe und absinkender Dreschtrommeldrehzahl die Abscheideverluste zunehmen, bzw. die Abscheidung sinkt.

Fig. 4b) zeigt das Kennlinienfeld D zu dem funktionalen Zusammenhang zwischen der Ausgangsgröße "Abscheideverluste" und den Eingangsgrößen "Schichthöhe" und "Korbweite". Hieraus ergibt sich, dass mit ansteigender, den Durchsatz repräsentierender Schichthöhe und ansteigender Korbweite die Abscheideverluste zunehmen.

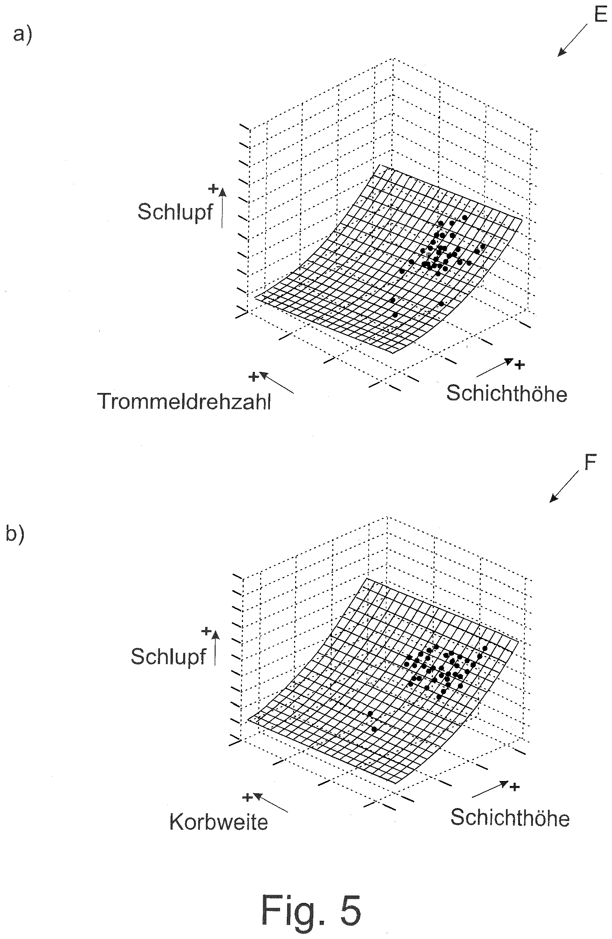

Fig. 5a) zeigt das Kennlinienfeld E zu dem funktionalen Zusammenhang zwischen der die Dreschwerksbelastung repräsentierende Ausgangsgröße "Schlupf-Dreschwerk-Antrieb" und den Eingangsgrößen "Schichthöhe" und "Trommeldrehzahl". Hieraus ergibt sich, dass mit ansteigender, den Durchsatz repräsentierender Schichthöhe und absinkender Trommeldrehzahl die Belastung des Dreschwerks, hier der Schlupf im Antriebsstrang des Dreschwerks, ansteigt.

Fig. 5b) zeigt das Kennlinienfeld F zu dem funktionalen Zusammenhang zwischen der Ausgangsgröße "Schlupf-Dreschwerk-Antrieb" und den Eingangsgrößen "Schichthöhe" und "Korbweite". Hieraus ergibt sich, dass mit ansteigender Schichthöhe und absinkender Korbweite der Schlupf im Dreschwerk-Antrieb ansteigt.

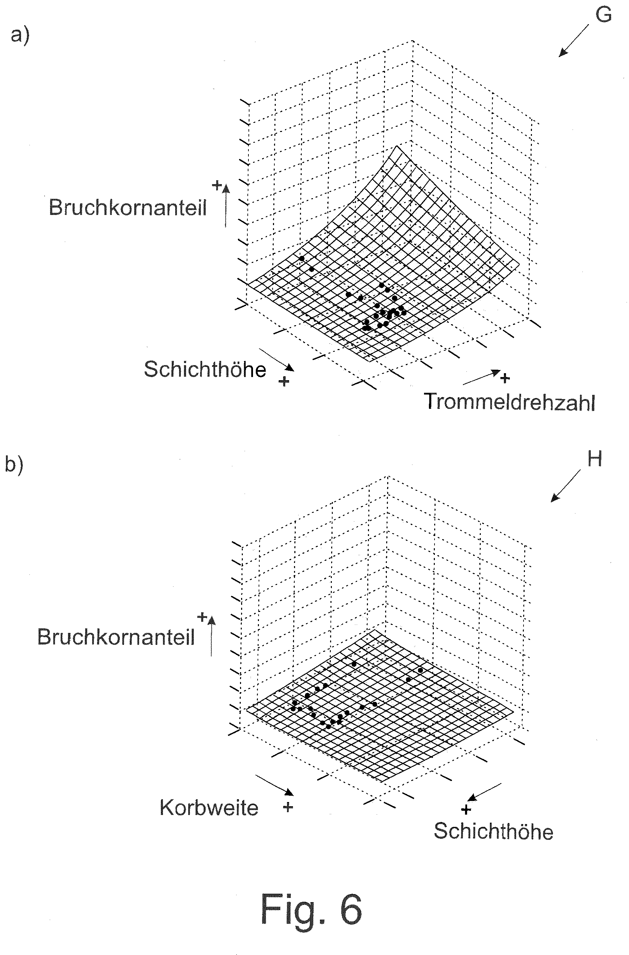

Fig. 6a) zeigt das Kennlinienfeld G zu dem funktionalen Zusammenhang zwischen der Ausgangsgröße "Bruchkornanteil" und den Eingangsgrößen "Schichthöhe" und "Trommeldrehzahl". Hieraus ergibt sich, dass mit ansteigender Trommeldrehzahl 1aund absinkender Schichthöhe der Bruchkornanteil ansteigt.

Fig. 6b) zeigt das Kennlinienfeld H zu dem funktionalen Zusammenhang zwischen der Ausgangsgröße "Bruchkornanteil" und den Eingangsgrößen "Schichthöhe" und "Korbweite". Hieraus ergibt sich, dass mit absinkender, den Durchsatz repräsentierender Schichthöhe und absinkender Korbweite der Bruchkornanteil ansteigt.

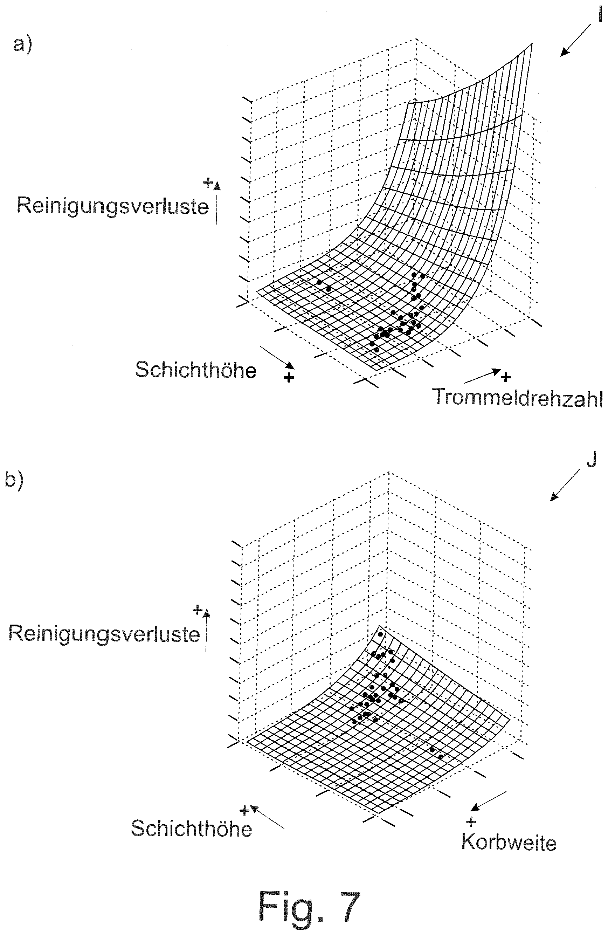

Fig. 7a) zeigt das Kennlinienfeld I zu dem funktionalen Zusammenhang zwischen der Ausgangsgröße "Reinigungsverluste" und den Eingangsgrößen "Schichthöhe" und "Trommeldrehzahl". Hieraus ergibt sich, dass mit ansteigender Trommeldrehzahl 1a und ansteigender, den Durchsatz repräsentierender Schichthöhe die Reinigungsverluste ansteigen.

Fig. 7b) zeigt das Kennlinienfeld J zu dem funktionalen Zusammenhang zwischen der Ausgangsgröße "Reinigungsverluste" und den Eingangsgrößen "Schichthöhe" und "Korbweite". Hieraus ergibt sich, dass mit abnehmender Korbweite 1b und ansteigender, den Durchsatz repräsentierender Schichthöhe die Reinigungsverluste ansteigen.

Der oben erläuterte Abgleich des Systemmodells 11b auf den aktuellen Ernteprozeßzustand erfolgt für den Fall des Systemmodells 11b mit mindestens einem Kennlinienfeld A-J vorzugsweise dadurch, dass die Rechenvorrichtung 12 mindestens eines der Kennlinienfelder A-J im laufenden Erntebetrieb, insbesondere zyklisch, auf den Ernteprozesszustand abgleicht. Dabei umfasst die Definition des Systemmodells 11b durch die Recheneinheit 12 in Abhängigkeit von der im Speicher 11 abgelegten Sensorkonfiguration 11c neben der Definition der Kennlinienfelder A-J auch eine Definition des Abgleichs des Systemmodells 11b.

In den Fig. 3 bis 7 sind jeweils eine Reihe von realen Sensormeßwerten zu dem jeweiligen Ernteprozeßzustand eingetragen. In dem obigen Abgleich nimmt die Rechenvorrichtung 12 eine Veränderung des jeweiligen Kennlinienfeldes A-J vor, um eine Annäherung des Kennlinienfeldes A-J an die realen Sensormeßwerte zu erreichen. Dabei kann beispielsweise das gesamte Kennlinienfeld A-J in Richtung der jeweiligen Ausgangsgröße, in den Fig. 3 bis 7 nach oben oder nach unten, verschoben werden. Besonders vorteilhaft ist allerdings, wenn die Annäherung des Kennlinienfeldes A-J so getroffen ist, dass sie auch eine Änderung der Verläufe der jeweiligen Kennlinien mit sich bringt.

Im Rahmen der obigen Definition des Systemmodells 11b ordnet die Rechenvorrichtung 12 den obigen Kennlinenfeldern A-J hinsichtlich eines eventuellen Abgleichs unterschiedliche Eigenschaften zu.

In einer ersten Variante ist es vorgesehen, dass die Rechenvorrichtung 12 mindestens eines der Kennlinienfelder A-J als dynamisches Kennlinienfeld definiert und im laufenden Erntebetrieb, insbesondere zyklisch, auf den sensorisch erfassten Ernteprozesszustand abgleicht.

In einer zweiten Variante ist es vorgesehen, dass die Rechenvorrichtung 12 für mindestens einen Ernteprozeßparameter der Parametergruppe das zugeordnete Kennlinienfeld A-J als statisches Kennlinienfeld definiert und nicht dem Abgleich mit dem sensorisch erfassten Ernteprozeßzustand unterwirft. Dies ist vorzugsweise der Fall, wenn der betreffende Ernteprozeßparameter nach der Sensorkonfiguration 11c nicht durch die Sensoranordnung 15 ermittelbar ist, ein entsprechender Sensor 16 also nicht vorhanden oder betriebsbereit ist.

Weiter ist es vorzugsweise so, dass die Rechenvorrichtung 12 für mindestens einen Ernteprozeßparameter der Parametergruppe, insbesondere in Abhängigkeit von der Sensorkonfiguration 11c, eine benutzerseitige Eingabe zum Ernteprozeßparameter oder des Ernteprozeßparameters über eine Ein-/Ausgabevorrichtung 19 erlaubt. Vorzugsweise gleicht die Rechenvorrichtung 12 das betreffende Kennlinienfeld A-J dann basierend auf der benutzerseitigen Eingabe ab. Alternativ oder zusätzlich kann es jedoch vorgesehen sein, dass die insbesondere autonome Ermittlung des mindestens einen Dreschwerksparameters 1a, 1b basierend auf der benutzerseitigen Eingabe vorgenommen wird. Dabei ist es vorzugsweise so, dass die Rechenvorrichtung 12 Abfragen betreffend den jeweiligen Ernteprozessparameter erzeugt und über die Ein-/Ausgabe-vorrichtung 19 ausgibt. Auf eine solche Abfrage hin kann der Fahrer 13 zumindest einen Teil des Ernteprozesszustands über die Ein-/Ausgabevorrichtung eingeben. Hierfür weist die Ein-/Ausgabevorrichtung 19 entsprechende Eingabeelemente 20a und Ausgabeelemente 20b auf.

Um auf eine Änderung der Sensorkonfiguration 15 im laufenden Betrieb reagieren zu können, überprüft die Rechenvorrichtung 12 insbesondere zyklisch, ob alle Sensoren 16 gemäß der im Speicher 11 hinterlegten Sensorkonfiguration 11cbetriebsfähig sind. Für den Betriebsfall, dass ein Sensor 16 oder mehrere Sensoren 16 betriebsunfähig ist bzw. sind, nimmt die Rechenvorrichtung 12 eine entsprechende Modifikation der Sensorkonfiguration 11c vor und legt diese im Speicher 11 ab. Damit kann die neue Sensorkonfiguration 11c im weiteren Betrieb wie oben erläutert Berücksichtigung finden.

Die obige Definition des Systemmodells 11b lässt sich anhand der folgenden drei Beispiele demonstrieren:

Für einen ersten Betriebsfall, bei dem die Sensorkonfiguration 11c einen betriebsbereiten Abscheideverlustsensor 16b und Reinigungsverlustsensor 16e, jedoch keinen betriebsbereiten Bruchkornsensor 16d und keinen betriebsbereiten Ausdruschverlustsensor 16a aufweist, definiert die Rechenvorrichtung 12 die den Ernteprozeßparametern "Bruchkorn" und "Ausdrusch" zugeordneten Kennlinienfelder G,H,A,B (Fig. 6, 3) vorzugsweise als statische Kennlinienfelder und die den Ernteprozeßparametern "Abscheideverluste" und "Reinigungsverluste" zugeordneten Kennlinienfelder C,D,I,J (Fig. 4, 7) als dynamische Kennlinienfelder.

Für einen zweiten Betriebsfall, bei dem die Sensorkonfiguration 11c einen betriebsbereiten Abscheideverlustsensor 16b, Reinigungsverlustsensor 16e und Bruchkornsensor 16d, jedoch keinen betriebsbereiten Ausdruschverlustsensor 16a aufweist, definiert die Rechenvorrichtung 12 das dem Ernteprozeßparameter "Ausdruschverluste" zugeordnete Kennlinienfeld A,B (Fig. 3) als statisches Kennlinienfeld und die den Ernteprozeßparametern "Abscheideverluste", "Reinigungsverluste" und "Bruchkornverluste" zugeordneten Kennlinienfelder C,D,I,J,G,H (Fig. 4, 7, 6) als dynamische Kennlinienfelder.

Für einen dritten Betriebsfall, bei dem die Sensorkonfiguration 11c einen betriebsbereiten Abscheideverlustsensor 16b, Reinigungsverlustsensor 16e, Bruchkornsensor 16d und Ausdruschverlustsensor 16a aufweist, definiert die Rechenvorrichtung 12 die den Ernteprozeßparametern "Abscheideverluste", "Reinigungsverluste", "Bruchkornverluste" und "Ausdruschverluste" zugeordneten Kennlinienfelder C,D,I,J,G,H,A,B (Fig. 4, 7, 6, 3) als dynamische Kennlinienfelder.

### Bezugszeichenliste

- 1: Dreschwerk
- 1a: Trommeldrehzahl
- 1b: Korbweite 1b
- 2: Schneidwerk
- 3: Schrägförderer
- 4: Dreschtrommel
- 5: Dreschkorb
- 6: Abscheidevorrichtung
- 7: Reinigungsvorrichtung
- 8: Verteilanordnung
- 9: Transportanordnung
- 9a: Korntank
- 10: Fahrerassistenzsystem
- 11: Speicher
- 11a: Ernteprozeßstrategie
- 11b: Systemmodell
- 11c: Sensorkonfiguration
- 12: Rechenvorrichtung
- 13: Fahrer
- 14: Dreschautomat
- 15: Sensoranordnung
- 16: Sensor
- 16a: Ausdruschverlustsensor
- 16b: Abscheideverlustsensor
- 16c: Schlupfsensor
- 16d: Bruchkornsensor
- 16e: Reinigungsverlustsensor
- 16f: Schichthöhensensor
- 16g: Schwadsensor
- 17: Korntank
- 18: Schwad
- 19: Ein-/Augabevorrichtung
- 20a: Eingabeelemente
- 20b: Ausgabeelemente
- A-J: Kennlinienfelder

## Patentansprüche

1. Mähdrescher mit einem Dreschwerk (1) zum Dreschen von aufgenommenem Erntegut zu Korngut und mit einem Fahrerassistenzsystem (10) zur Ansteuerung des Dreschwerks (1), wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst, wobei eine Sensoranordnung (15) zur Erfassung zumindest eines Teils des aktuellen Ernteprozesszustands vorgesehen ist,
**dadurch gekennzeichnet,**
**dass** der Sensoranordnung (15) eine Sensorkonfiguration (11c) zugeordnet ist, dass die Sensorkonfiguration (11c) durch die Art und den Umfang betriebsbereiter Sensoren (16) der Sensoranordnung (15) definiert und im Speicher (11) hinterlegt oder hinterlegbar ist, dass in dem Speicher (11) ein funktionales Systemmodell (11b) für zumindest einen Teil des Mähdreschers hinterlegt ist, wobei das funktonale Systemmodell (11b) zumindest einen Teil der funktionalen Zusammenhänge innerhalb des Mähdreschers abbildet und dass die Rechenvorrichtung (12) dazu eingerichtet ist, eine insbesondere autonome Ermittlung mindestens eines Dreschwerksparameters (1a, 1b) basierend auf dem Systemmodell (11b) und dem Ernteprozeßzustand vorzunehmen und dass die Recheneinheit (12) das der Ansteuerung des Dreschwerks (1) zugrundeliegende Systemmodell (11b) in Abhängigkeit von der im Speicher (11) abgelegten Sensorkonfiguration (11c) definiert., und wobei die Rechenvorrichtung (12) insbesondere zyklisch überprüft, ob alle Sensoren (16) gemäß der im Speicher (11) hinterlegten Sensorkonfiguration (11c) betriebsfähig sind und dass die Rechenvorrichtung (12) für den Betriebsfall, dass ein Sensor (16) oder mehrere Sensoren (16) betriebsunfähig ist bzw. sind, eine entsprechende Modifikation der Sensorkonfiguration (11c) vornimmt und im Speicher (11) ablegt.

2. Mähdrescher nach Anspruch 1, **dadurch gekennzeichnet, dass** das Dreschwerk (1) zusammen mit dem Fahrerassistenzsystem (10) einen Dreschautomaten (14) bildet, indem im Speicher (11) eine Mehrzahl auswählbarer Ernteprozeßstrategien (11a) hinterlegt sind und indem die Rechenvorrichtung (12) dazu eingerichtet ist, zur Umsetzung der jeweils ausgewählten Ernteprozeßstrategie (11a) mindestens einen Maschinenparameter - Dreschwerksparameter (1a, 1b) - autonom zu ermitteln und dem Dreschwerk (1) vorzugeben.

3. Mähdrescher nach Anspruch 1 oder 2, **dadurch gekennzeichnet, dass** durch die Sensoranordnung (15) in Abhängigkeit von der Sensorkonfiguration (11c) einer oder mehrere der Ernteprozeßparameter "Ausdruschverluste", "Bruchkornanteil", "Schichthöhe", "Abscheideverluste", "Reinigungsverluste", "Dreschwerksbelastung", "Kraftstoffverbrauch" ermittelbar ist bzw. sind.

4. Mähdrescher nach einem der vorhergehenden Ansprüche, **dadurch gekennzeichnet, dass** eine Parametergruppe von Ernteprozeßparametern definiert ist, denen jeweils mindestens ein in dem Speicher (11) hinterlegtes, funktionale Zusammenhänge des Mähdreschers abbildendes Kennlinienfeld (A-J) des Systemmodells (11c) zugeordnet ist und dass der jeweilige Ernteprozeßparameter die Ausgangsgröße des zugeordneten, mindestens einen Kennlinienfelds (A-J) ist.

5. Mähdrescher nach Anspruch 4, **dadurch gekennzeichnet, dass** die Rechenvorrichtung (12) mindestens eines der Kennlinienfelder (A-J) im laufenden Erntebetrieb, insbesondere zyklisch, auf den Ernteprozesszustand abgleicht und dass die Definition des Systemmodells (11c) durch die Recheneinheit (12) in Abhängigkeit von der im Speicher (11) abgelegten Sensorkonfiguration (11c) neben der Definition der Kennlinienfelder (A-J) auch eine Definition des Abgleichs des Systemmodells (11b) umfasst.

6. Mähdrescher nach Anspruch 4 oder 5, **dadurch gekennzeichnet, dass** die Rechenvorrichtung (12) mindestens eines der Kennlinienfelder (A-J) als dynamisches Kennlinienfeld definiert und im laufenden Erntebetrieb, insbesondere zyklisch, auf den sensorisch erfassten Ernteprozesszustand abgleicht.

7. Mähdrescher nach einem der Ansprüche 4 bis 6, **dadurch gekennzeichnet, dass** die Rechenvorrichtung (12) für mindestens einen Ernteprozeßparameter der Parametergruppe, der nach der Sensorkonfiguration (11c) nicht durch die Sensoranordnung (15) ermittelbar ist, das zugeordnete Kennlinienfeld (A-J) als statisches Kennlinienfeld definiert und nicht dem Abgleich mit dem sensorisch erfassten Ernteprozeßzustand unterwirft.

8. Mähdrescher nach einem der Ansprüche 4 bis 7, **dadurch gekennzeichnet, dass** die Rechenvorrichtung (12) für mindestens einen Ernteprozeßparameter der Parametergruppe, insbesondere in Abhängigkeit von der Sensorkonfiguration (11c), eine benutzerseitige Eingabe zum Ernteprozeßparameter oder des Ernteprozeßparameters über eine Ein-/Ausgabevorrichtung (19) erlaubt, vorzugsweise, dass die Rechenvorrichtung (12) das Kennlinienfeld (A-J) basierend auf der benutzerseitigen Eingabe abgleicht und/oder die insbesondere autonome Ermittlung des mindestens einen Dreschwerksparameters (1a, 1b) basierend auf der benutzerseitigen Eingabe vornimmt.

9. Mähdrescher nach einem der vorhergehenden Ansprüche, **dadurch gekennzeichnet, dass** für den Betriebsfall, dass die Sensorkonfiguration (11c) einen betriebsbereiten Abscheideverlustsensor (16b) und Reinigungsverlustsensor (16e), jedoch keinen betriebsbereiten Bruchkornsensor (16d) und keinen betriebsbereiten Ausdruschverlustsensor (16a) aufweist, die Rechenvorrichtung (12) die den Ernteprozeßparametern "Bruchkorn" und "Ausdrusch" zugeordneten Kennlinienfelder (G,H,A,B) als statische Kennlinienfelder definiert und die den Ernteprozeßparametern "Abscheideverluste" und "Reinigungsverluste" zugeordneten Kennlinienfelder (C,D,I,J) als dynamische Kennlinienfelder definiert.

10. Mähdrescher nach einem der vorhergehenden Ansprüche, **dadurch gekennzeichnet, dass** für den Betriebsfall, dass die Sensorkonfiguration (11c) einen betriebsbereiten Abscheideverlustsensor (16b), Reinigungsverlustsensor (16e) und Bruchkornsensor (16d), jedoch keinen betriebsbereiten Ausdruschverlustsensor (16a) aufweist, die Rechenvorrichtung (12) das dem Ernteprozeßparameter "Ausdruschverluste" zugeordnete Kennlinienfeld (A,B) als statisches Kennlinienfeld und die den Ernteprozeßparametern "Abscheideverluste", "Reinigungsverluste" und "Bruchkornverluste" zugeordneten Kennlinienfelder (C,D,I,J,G,H) als dynamische Kennlinienfelder definiert.

11. Mähdrescher nach einem der vorhergehenden Ansprüche, **dadurch gekennzeichnet, dass** für den Betriebsfall, dass die Sensorkonfiguration (11c) einen betriebsbereiten Abscheideverlustsensor (16b), Reinigungsverlustsensor (16e), Bruchkornsensor (16d) und Ausdruschverlustsensor (16a) aufweist, die Rechenvorrichtung (12) die den Ernteprozeßparametern "Abscheideverluste", "Reinigungsverluste", "Bruchkornverluste" und "Ausdruschverluste" zugeordneten Kennlinienfelder (C,D,I,J,G,H,A,B) als dynamische Kennlinienfelder definiert.

## Claims

1. A combine harvester comprising a threshing mechanism (1) for threshing picked-up crop material to obtain grain and a driver assist system (10) for controlling the threshing mechanism (1), wherein the driver assist system (10) comprises a memory (11) for storing data and a computing device (12) for processing the data stored in the memory (11), wherein there is provided a sensor arrangement (15) for ascertaining at least a part of a current harvesting process state,
**characterised in that**
a sensor configuration (11c) is associated with the sensor arrangement (15), the sensor configuration (11c) is defined by the type and the scope of operationally ready sensors (16) and is or can be stored in the memory (11), a functional system model (11b) for at least a part of the combine harvester is stored in the memory (11), wherein the functional system model (11b) reproduces at least a part of the functional relationships within the combine harvester, and the computing device (12) is adapted to effect in particular autonomous determination of at least one threshing-mechanism parameter (1a, 1b) based on the system model (11b) and the harvesting process state and the computing device (12) defines the system model (11b) forming the basis for controlling the threshing mechanism (1) in dependence on the sensor configuration (11c) stored in the memory (11), and wherein the computing device 12 checks in particular cyclically whether all sensors (16) according to the sensor configuration (11c) stored in the memory (11) are operational and for the operating situation where one sensor (16) or a plurality of sensors (16) is or are non-operational the computing device 12 effects a corresponding modification of the sensor configuration (11c) and stores it in the memory (11).

2. A combine harvester according to claim 1 **characterised in that** the threshing mechanism (1) together with the driver assist system (10) forms an automated threshing mechanism (14) by a plurality of selectable harvesting process strategies (11a) being stored in the memory (11) and, by the computing device (12), in order to implement the respectively selected harvesting process strategy (11a), being adapted to autonomously determine at least one machine parameter - threshing mechanism parameter (1a, 1b) - and to set it for the threshing mechanism (1).

3. A combine harvester according to claim 1 or claim 2 **characterised in that** depending on the sensor configuration (11c) the sensor arrangement (15) can determine one or more of the harvesting process parameters: "threshing losses", "broken grain portion", "layer height", "separation losses", "cleaning losses", "threshing mechanism load" and "fuel consumption."

4. A combine harvester according to one of the preceding claims **characterised in that** there is defined a parameter group of harvesting process parameters, with which at least one set of characteristics (A-J) of the system model (11c), depicting functional interrelations of the combine harvester, is respectively associated and the respective harvesting process parameter is the output variable of the associated, at least one set of characteristics (A-J).

5. A combine harvester according to claim 4 **characterised in that** the computing device 12 matches at least one of the sets of characteristics (A-J) with a harvesting process state, in particular cyclically, during on-going harvesting operation and the definition of the system model (11c) by the computing device (12) in dependence on the sensor configuration (11c) stored in the memory (11) also includes, besides the definition of the sets of characteristics (A-J), a definition of the matching of the system model (11b).

6. A combine harvester according to claim 4 or claim 5 **characterised in that** the computing device (12) defines at least one of the sets of characteristics (A-J) as a dynamic set of characteristics and matches same with the harvesting process state that was detected by way of sensors during the on-going harvesting operation, in particular cyclically.

7. A combine harvester according to one of claims 4 to 6 **characterised in that** for at least one harvesting process parameter of the parameter group which according to the system configuration (11c) cannot be determined by the sensor arrangement (15) the computing device (12) defines the associated set of characteristics (A-J) as a static set of characteristics and does not subject same to matching with the harvesting process state detected by way of sensors.

8. A combine harvester according to one of claims 4 to 7 **characterised in that** for at least one harvesting process parameter of the parameter group, in particular in dependence on the sensor configuration (11c), the computing device (12) permits user input for the harvesting process parameter or of the harvesting process parameter by way of an input/output device (19), preferably the computing device (12) matches the set of characteristics (A-J) based on the user input and/or effects in particular autonomous determination of the at least one threshing mechanism parameter (1a, 1b) on the basis of the user input.

9. A combine harvester according to one of the preceding claims **characterised in that** for the operating situation in which the sensor configuration (11c) comprises an operationally ready separation loss sensor (16) and cleaning loss sensor (16), but does not comprise an operationally ready broken grain sensor (16) nor an operationally ready threshing loss sensor (16) the computing device (12) defines the sets of characteristics (G, H, A, B) associated with the harvesting process parameters "broken grain" and "threshing" as static sets of characteristics and defines the sets of characteristics (C, D, I, J) associated with the harvesting process parameters "separation losses" and "cleaning losses" as dynamic sets of characteristics.

10. A combine harvester according to one of the preceding claims **characterised in that** for the operating situation in which the sensor configuration (11c) comprises an operationally ready separation loss sensor (16), cleaning loss sensor (16) and broken grain sensor (16), but does not comprise an operationally ready threshing loss sensor (16) the computing device (12) defines the set of characteristics (A, B) associated with the harvesting process parameter "threshing losses" as a static set of characteristics and defines sets of characteristics (C, D, I, J, G, H) associated with the harvesting process parameters "separation losses", "cleaning losses", and "broken grain losses" as dynamic sets of characteristics.

11. A combine harvester according to one of the preceding claims **characterised in that** for the operating situation in which the sensor configuration (11c) has an operationally ready separation loss sensor (16), cleaning loss sensor (16), broken grain sensor (16), and threshing loss sensor (16) the computing device (12) defines sets of characteristics (C, D, I, J, G, H, A, B) associated with the harvesting process parameters "separation losses", "cleaning losses", "broken-grain losses", and "threshing losses" as dynamic sets of characteristics.

## Revendications

1. Moissonneuse-batteuse comprenant un système de battage (1) pour battre sous forme de produit en grains du produit de récolte ramassé et comprenant un système d'assistance à la conduite (10) pour commander le système de battage (1), le système d'assistance à la conduite (10) comprenant une mémoire (11) pour enregistrer des données et un dispositif de calcul (12) pour traiter les données enregistrées dans la mémoire (11), un agencement de capteur (15) étant prévu pour détecter au moins une partie de l'état de processus de récolte instantané, **caractérisée en ce qu'**à l'agencement de capteur (15) est associée une configuration de capteur (11c), **en ce que** la configuration de capteur (11c) est définie par le type et le nombre de capteurs opérationnels (16) de l'agencement de capteur (15) et est enregistrée ou enregistrable dans la mémoire (11), **en ce que** dans la mémoire (11) est enregistré un modèle de système fonctionnel (11b) pour au moins une partie de la moissonneuse-batteuse, le modèle de système fonctionnel (11b) représentant au moins une partie des relations fonctionnelles à l'intérieur de la moissonneuse-batteuse, et **en ce que** le dispositif de calcul (12) est agencé pour procéder à une détermination en particulier autonome au moins d'un paramètre de système de battage (1a, 1b) sur la base du modèle de système (11b) et de l'état de processus de récolte, et **en ce que** l'unité de calcul (12) définit le modèle de système (11b) servant à la commande du système de battage (1) en fonction de la configuration de capteur (11c) enregistrée dans la mémoire (11), et le dispositif de calcul (12) étant contrôlé en particulier cycliquement pour déterminer si tous les capteurs (16) selon la configuration de capteur (11c) enregistrée dans la mémoire (11) sont opérationnels, et **en ce que**, dans le cas d'exploitation où un capteur (16) ou plusieurs capteurs (16) est, respectivement sont non opérationnels, le dispositif de calcul (12) procède à une modification correspondante de la configuration de capteur (11c) et l'enregistre dans la mémoire (11).

2. Moissonneuse-batteuse selon la revendication 1, **caractérisée en ce que** le système de battage (1) forme, conjointement avec le système d'assistance à la conduite (10), un automate de battage (14) par le fait que dans la mémoire (11) est enregistrée une pluralité de stratégies de processus de récolte sélectionnables (11a) et par le fait que, pour mettre en œuvre la stratégie de processus de récolte sélectionnée respective (11a), le dispositif de calcul (12) est agencé pour déterminer de manière autonome au moins un paramètre machine - paramètre de système de battage (1a, 1b) - et pour le prescrire au système de battage (1) .

3. Moissonneuse-batteuse selon la revendication 1 ou 2, **caractérisée en ce que** l'agencement de capteur (15) permet de déterminer en fonction de la configuration de capteur (11c) un ou plusieurs des paramètres de processus de récolte « pertes de battage », « proportion de grains cassés », « hauteur de couche », « pertes à la séparation », « pertes de nettoyage », « charge du système de battage », « consommation de carburant ».

4. Moissonneuse-batteuse selon une des revendications précédentes, **caractérisée en ce qu'**est défini un groupe de paramètres de paramètres de processus de récolte auxquels est associé respectivement au moins un réseau de courbes caractéristiques (A-J) du modèle de système (11c) enregistré dans la mémoire (11) et représentant des relations fonctionnelles de la moissonneuse-batteuse, et **en ce que** le paramètre de processus de récolte respectif est la grandeur de sortie du au moins un réseau de courbes caractéristiques (A-J) associé.

5. Moissonneuse-batteuse selon la revendication 4, **caractérisée en ce que**, en cours de récolte, le dispositif de calcul (12) aligne, en particulier cycliquement, au moins d'un des réseaux de courbes caractéristiques (A-J) sur l'état de processus de récolte, et **en ce que** la définition du modèle de système (11c) par l'unité de calcul (12) en fonction de la configuration de capteur (11c) enregistrée dans la mémoire (11) comprend, outre la définition des réseaux de courbes caractéristiques (A-J), également une définition de l'alignement du modèle de système (11b).

6. Moissonneuse-batteuse selon la revendication 4 ou 5, **caractérisée en ce que** le dispositif de calcul (12) définit au moins un des réseaux de courbes caractéristiques (A-J) en tant que réseau dynamique de courbes caractéristiques et, en cours de récolte, l'aligne, en particulier cycliquement, sur l'état de processus de récolte détecté par les capteurs.

7. Moissonneuse-batteuse selon une des revendications 4 à 6, **caractérisée en ce que**, pour au moins un paramètre de processus de récolte du groupe de paramètres qui, selon la configuration de capteur (11c), n'est pas déterminable par l'agencement de capteur (15), le dispositif de calcul (12) définit le réseau de courbes caractéristiques associé (A-J) en tant que réseau de courbes caractéristiques statique et ne le soumet pas à l'alignement avec l'état de processus de récolte détecté par les capteurs.

8. Moissonneuse-batteuse selon une des revendications 4 à 7, **caractérisée en ce que**, pour au moins un paramètre de processus de récolte du groupe de paramètres, le dispositif de calcul (12) autorise, en particulier en fonction de la configuration de capteur (11c), une entrée côté utilisateur vers le paramètre de processus de récolte ou du paramètre de processus de récolte par l'intermédiaire d'un dispositif d'entrée/sortie (19), de préférence **en ce que** le dispositif de calcul (12) aligne le réseau de courbes caractéristiques (A-J) sur la base de l'entrée côté utilisateur et/ou procède à la détermination, en particulier autonome, du au moins un paramètre de système de battage (1a, 1b) sur la base de l'entrée côté utilisateur.

9. Moissonneuse-batteuse selon une des revendications précédentes, **caractérisée en ce que** pour le cas d'exploitation où la configuration de capteur (11c) comporte un capteur de pertes à la séparation (16b) et un capteur de pertes de nettoyage (16e) opérationnels, mais pas de capteur de grains cassés (16d) opérationnel et pas de capteur de pertes de battage (16a) opérationnel, le dispositif de calcul (12) définit les réseaux de courbes caractéristiques (G,H,A,B) associés aux paramètres de processus de récolte « grains cassés » et « battage » en tant que réseaux de courbes caractéristiques statiques, et les réseaux de courbes caractéristiques (C,D,I,J) associés aux paramètres de processus de récolte « pertes à la séparation » et « pertes de nettoyage » en tant que réseaux de courbes caractéristiques dynamiques.

10. Moissonneuse-batteuse selon une des revendications précédentes, **caractérisée en ce que** pour le cas d'exploitation où la configuration de capteur (11c) comporte un capteur de pertes à la séparation (16b), un capteur de pertes de nettoyage (16e) et un capteur de grains cassés (16d) opérationnels, mais pas de capteur de pertes de battage (16a) opérationnel, le dispositif de calcul (12) définit le réseau de courbes caractéristiques (A, B) associé au paramètre de processus de récolte « pertes de battage » en tant que réseau de courbes caractéristiques statique, et les réseaux de courbes caractéristiques (C,D,I,J,G,H) associés aux paramètres de processus de récolte « pertes à la séparation », « pertes de nettoyage » et « pertes par grains cassés » en tant que réseaux de courbes caractéristiques dynamiques.

11. Moissonneuse-batteuse selon une des revendications précédentes, **caractérisée en ce que** pour le cas d'exploitation où la configuration de capteur (11c) comporte un capteur de pertes à la séparation (16b), un capteur de pertes de nettoyage (16e), un capteur de grains cassés (16d) et un capteur de pertes de battage (16a) opérationnels, le dispositif de calcul (12) définit les réseaux de courbes caractéristiques (C,D,I,J,G,H,A,B) associés aux paramètres de processus de récolte « pertes à la séparation », « pertes de nettoyage », « pertes par grains cassés » et « pertes de battage » en tant que réseaux de courbes caractéristiques dynamiques.
